# EUROPEAN PATENT APPLICATION

(11) **EP 1 176 591 A2**
(43) Date of publication of application: **30.01.2002**
(21) Application number: 01305750.0
(22) Date of filing: 03.07.2001
(51) Int. Cl.: G11B 27/00, G11B 20/00

(54) **Audio data recording disc and drive therefor**

(30) Priority: 24.07.2000 JP 2000223016
(71) Applicant: Victor Company of Japan, Ltd., Yokohama 221-0022 (JP)
(72) Inventor: Fuchigami, Norihiko, Kamakura-shi, Kanagawa-ken (JP)
(74) Representative: Dempster, Benjamin John Naftel

(57) **Abstract**

A recording disc stores audio data, and management data. The management data include original management data and user defined management data. The original management data enable the audio data to be reproduced in a recording order. The user defined management data include cell information pieces related to respective cells. The cells correspond to a reproduction unit and are related to the audio data. The user defined management data represent a user defined track which includes at least one of the cells and which is decided in response to the cell information pieces according to user's instruction. The user defined track designates portions of the audio data which correspond to the at least one cell in the user defined track. The user defined track represents a reproduction order decided by user's instruction. The user defined management data enable the designated portions of the audio to be reproduced in the reproduction order.

## Description

This invention relates to an audio data recording disc. Also, this invention relates to an apparatus for reproducing information from an audio data recording disc. In addition, this invention relates to a method of reproducing information from an audio data recording disc. Furthermore, this invention relates to a method of recording audio data on a recording disc.

There are DVD-ROM discs, DVD-RW discs, and DVD-RAM discs. The VIDEO RECORDING standards (DVD-VR standards) prescribe the format of recording video data on a DVD-RW disc or a DVD-RAM disc.

According to the DVD-VR standards, video data are recorded on a disc as video objects (VOBs). The disc is also loaded with original management data and user defined management data. The original management data represent an original PGC (program chain) used for sequentially reproducing VOBs from the disc in an order equal to that of the recording of the VOBs on the disc. The user defined management data represent a user defined PGC or PGCs. Each user defined PGC relates to ones among the VOBs and portions of the VOBs which are selected by a user. The user defined PGC is used for sequentially reproducing the selected VOBs and the selected portions of the VOBs in an order desired by the user. On each disc, there is only one original PGC and one or more user defined PGCs.

The DVD-VR standards are unsuited for the recording of high-quality audio data on a disc. According to the DVD-VR standards, it is mandatory that each VOB contains a video stream. Thus, it is difficult to record only audio data on a disc. Regarding audio data, the DVD-VR standards support only 2-channel linear PCM audio data and compressed audio data. The DVD-VR standards do not support high-quality linear PCM audio data having more than 2 channels.

It is a first object of this invention to provide a high-quality audio data recording disc which is compatible with the DVD-VR standards.

It is a second object of this invention to provide an apparatus for reproducing information from a high-quality audio data recording disc which is compatible with the DVD-VR standards.

It is a third object of this invention to provide a method of reproducing information from a high-quality audio data recording disc which is compatible with the DVD-VR standards.

It is a fourth object of this invention to provide a method of recording high-quality audio data on a recording disc which is compatible with the DVD-VR standards.

A first aspect of this invention provides an audio data recording disc storing audio data, and recording and reproducing management data for the audio data, the recording and reproducing management data including original management data and user defined management data, the original management data being for enabling the audio data to be reproduced in an order equal to an order in which the audio data have been recorded, the user defined management data including cell information pieces related to respective cells, the cells corresponding to a reproduction unit and being related to the audio data, the user defined management data representing a user defined track which includes at least one of the cells and which is decided in response to the cell information pieces according to user's instruction, the user defined track designating portions of the audio data which correspond to the at least one cell in the user defined track, the user defined track representing a reproduction order decided by user's instruction, the user defined management data being for enabling the portions of the audio data which are designated by the user defined track to be reproduced in an order equal to the reproduction order represented by the user defined track.

A second aspect of this invention is based on the first aspect thereof, and provides an audio data recording disc wherein the cell information pieces include attached information pieces related to the user defined track, and the attached information pieces include 1) a data piece representing primary text information PRM_TXTI related to the user defined track, 2) a data piece representing a search pointer number IT_TXT_SRPN for item text information related to the user defined track, and 3) a data piece indicating representative sill-picture information REP_PICTI for designating a position of a still picture representative of the user defined track.

A third aspect of this invention is based on the first aspect thereof, and provides an audio data recording disc wherein the cell information pieces include attached information pieces related to the user defined track, the cell information pieces further include cell-type data pieces representing whether or not each of the cells is a first cell in the user defined track, the user defined track starts from the first cell represented by one of the cell-type data pieces, and the attached information pieces are stored in the first cell represented by the one of the cell-type data pieces.

A fourth aspect of this invention is based on the first aspect thereof, and provides an audio data recording disc wherein the cell information pieces include attached information pieces related to the user defined track, and the attached information pieces represent whether or not each of the cells is a first cell in the user defined track.

A fifth aspect of this invention is based on the first aspect thereof, and provides an audio data recording disc wherein the cell information pieces include attached information pieces related to the user defined track, and the attached information pieces occupy a first place in a cell-attached information piece set.

A sixth aspect of this invention provides an apparatus for reproducing information from an audio data recording disc in one of the first to fifth aspects of this invention. The apparatus comprises a memory; first means for reading user defined management data from the audio data recording disc; second means for deriving a relation between a user defined track and cells from the user defined management data read by the first means, and generating a signal representing the derived relation; third means for loading the memory with the relation-representing signal generated by the second means; and fourth means for reproducing at least a portion of audio data, text data, and still-picture data which corresponds to the user defined track from the audio data recording disc in response to the relation-representing signal in the memory.

A seventh aspect of this invention provides a method of reproducing information from an audio data recording disc in one of the first to fifth aspects of this invention. The method comprises the steps of reading user defined management data from the audio data recording disc; deriving a relation between a user defined track and cells from the read user defined management data; generating a signal representing the derived relation; loading a memory with the generated relation-representing signal; and reproducing at least a portion of audio data, text data, and still-picture data which corresponds to the user defined track from the audio data recording disc in response to the relation-representing signal in the memory.

An eighth aspect of this invention provides a method of recording audio data, and recording and reproducing management data on an audio data recording disc, the recording and reproducing management data including original management data and user defined management data, the original management data being for enabling the audio data to be reproduced in an order equal to an order in which the audio data have been recorded, the user defined management data including cell information pieces related to respective cells, the cells corresponding to a reproduction unit and being related to the audio data, the user defined management data representing a user defined track which includes at least one of the cells and which is decided in response to the cell information pieces according to user's instruction, the user defined track designating portions of the audio data which correspond to the at least one cell in the user defined track, the user defined track representing a reproduction order decided by user's instruction, the user defined management data being for enabling the portions of the audio data which are designated by the user defined track to be reproduced in an order equal to the reproduction order represented by the user defined track.

A ninth aspect of this invention is based on the eighth aspect thereof, and provides a method wherein the cell information pieces include attached information pieces related to the user defined track, and the attached information pieces include 1) a data piece representing primary text information PRM_TXTI related to the user defined track, 2) a data piece representing a search pointer number IT_TXT_SRPN for item text information related to the user defined track, and 3) a data piece indicating representative sill-picture information REP_PICTI for designating a position of a still picture representative of the user defined track.

A tenth aspect of this invention is based on the eighth aspect thereof, and provides a method wherein the cell information pieces include attached information pieces related to the user defined track, the cell information pieces further include cell-type data pieces representing whether or not each of the cells is a first cell in the user defined track, the user defined track starts from the first cell represented by one of the cell-type data pieces, and the attached information pieces are stored in the first cell represented by the one of the cell-type data pieces.

An eleventh aspect of this invention is based on the eighth aspect thereof, and provides a method wherein the cell information pieces include attached information pieces related to the user defined track, and the attached information pieces represent whether or not each of the cells is a first cell in the user defined track.

A twelfth aspect of this invention is based on the eighth aspect thereof, and provides a method wherein the cell information pieces include attached information pieces related to the user defined track, and the attached information pieces occupy a first place in a cell-attached information piece set.

A thirteenth aspect of this invention provides an apparatus for recording audio data, and recording and reproducing management data on an audio data recording disc, the recording and reproducing management data including original management data and user defined management data, the original management data being for enabling the audio data to be reproduced in an order equal to an order in which the audio data have been recorded, the user defined management data including cell information pieces related to respective cells, the cells corresponding to a reproduction unit and being related to the audio data, the user defined management data representing a user defined track which includes at least one of the cells and which is decided in response to the cell information pieces according to user's instruction, the user defined track designating portions of the audio data which correspond to the at least one cell in the user defined track, the user defined track representing a reproduction order decided by user's instruction, the user defined management data being for enabling the portions of the audio data which are designated by the user defined track to be reproduced in an order equal to the reproduction order represented by the user defined track.
Fig. 1 a diagram of the structure of directories and files on a related-art recording disc which is prescribed by the DVD-VR standards.
Fig. 2 is a diagram of original PGC information, programs, cells, and video objects in the related-art recording disc of Fig. 1.
Fig. 3 is a diagram of user defined PGC information, cells, and video objects in the related-art recording disc of Fig. 1.
Fig. 4 is a diagram of the details of the original PGC information in Fig. 2.
Fig. 5 is a diagram of the structure of directories and files on a DVD-AR disc according to a first embodiment of this invention.
Fig. 6 is a diagram of original PGC information, programs, cells, and audio objects in the DVD-AR disc of Fig. 5.
Fig. 7 is a diagram of user defined PGC information, user defined tracks, cells, and audio objects in the DVD-AR disc of Fig. 5.
Fig. 8 is a diagram of the details of the original PGC information in Fig. 6.
Fig. 9 is a diagram of user defined PGC information, user defined tracks, cells, and audio objects in a DVD-AR disc according to a second embodiment of this invention.
Fig. 10 is a diagram of the details of original PGC information or the user defined PGC information in Fig. 9.
Fig. 11 is a diagram of the details of a cell information piece A_CI#j in a DVD-AR disc according to a third embodiment of this invention.
Fig. 12 is a block diagram of a reproducing apparatus according to a fourth embodiment of this invention.
Fig. 13 is a block diagram of a reproducing apparatus according to a fifth embodiment of this invention.
Fig. 14 is a block diagram of a recording and reproducing apparatus according to a sixth embodiment of this invention.
Fig. 15 is a flowchart of a segment of a control program for a host microprocessing unit in Fig. 14.
Fig. 16 is a block diagram of a recording and reproducing apparatus according to a seventh embodiment of this invention.

Related art and background art which are not prior art to this invention will be explained below for a better understanding of this invention.

"DVD Specifications for Rewritable/Re-recordable Discs, Part 3 VIDEO RECORDING, Version 1.0" which are copy-protected indicate that a plurality of files are recorded on a DVD-RW disc or a DVD-RAM disc in conformity with the DVD-VR standards.

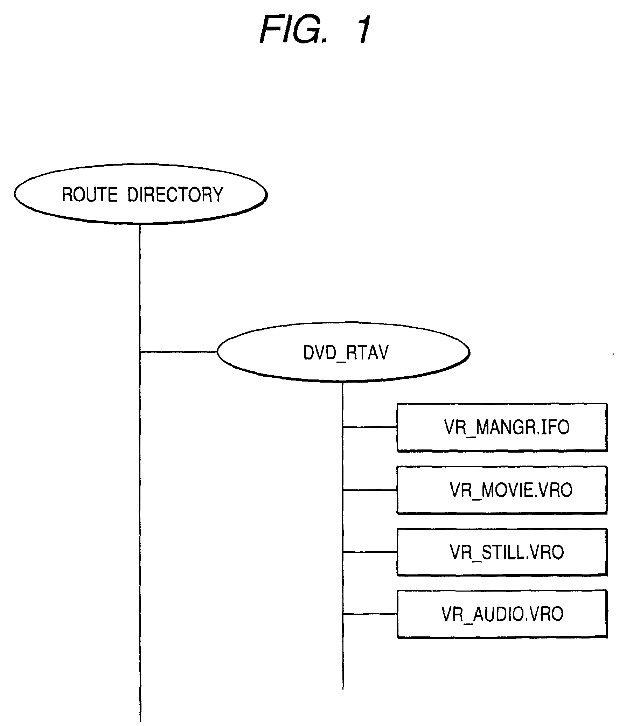

Fig. 1 shows the structure of directories and files on a disc which is prescribed by the DVD-VR standards. As shown in Fig. 1, there is a route directory under which a DVD_RTAV directory is placed as a sub directory. The DVD_RTAV directory contains a VR_MANGR.IFO file for storing all recording and reproducing management data including data representative of an original PGC and data representative of a user defined PGC or PGCs.

The DVD_RTAV directory further contains a VR_MOVIE.VRO file, a VR_STILL.VRO file, and a VR_AUDIO.VRO file. Video data are stored in the VR_MOVIE.VRO file. Still-picture data (data representing sill pictures) are stored in the VR_STILL.VRO file. Additional audio data related to the still pictures are stored in the VR_AUDIO.VRO file. In this way, the contents data (including the video data, the still-picture data, and the additional audio data) and the recording and reproducing management data are separately recorded on the disc on a file-by-file division basis. Thus, the order of reproducing the contents data can be decided by the user defined PGC or PGCs while the contents data remain unchanged.

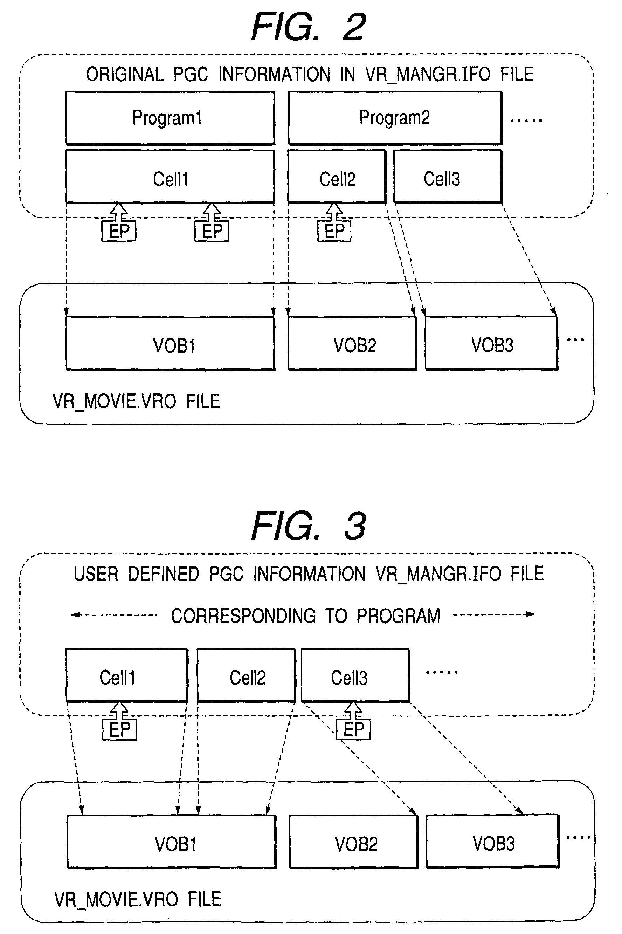

Fig. 2 shows the structure of original PGC information (original PGCI) being data representing an original PGC. A recording disc conforming to the DVD-VR standards is referred to as a DVD-VR disc. In the case where a sequence of video data representing one television program is recorded on a DVD-VR disc, the sequence of video data is handled as one program composed of one or more cells. In general, taking a pause during the recording causes one program to have a plurality of cells. Also, deleting an intermediate portion from one program to edit the program after the recording causes the program to have a plurality of cells. Each cell is related to one VOB (one video object). Each VOB is recorded as a program stream in conformity with the MPEG-2 system. Each VOB is a unit of continuous reproduction (continuous playback).

The structure of a program (or programs) and a cell (or cells) corresponds to the recording and reproducing management data for the original PGC. A group of VOBs corresponds to the video data. A program first recorded on a disc is denoted by Programl (program order number 1). Second and later programs recorded on the disc are denoted by Program2 (program order number 2), Program3 (program order number 3), ···, respectively. The reproduction accorded with the original PGC causes all the programs to be sequentially played back in the order of program order number, that is, the recording order. One can be selected from all the programs stated by the original PGC before the selected program is played back.

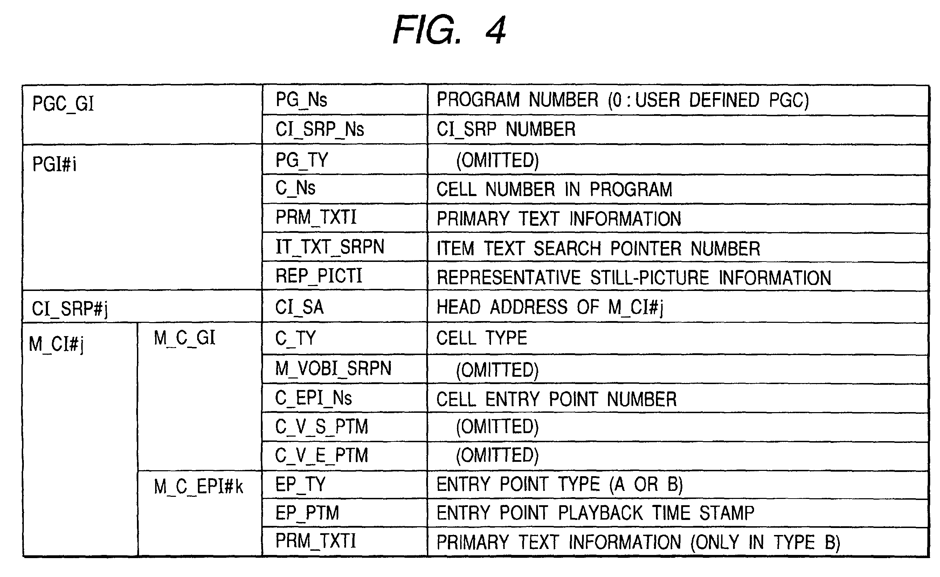

Fig. 3 shows the structure of user defined PGC information (user defined PGCI) being data representing a user defined PGC. Designated portions of the VOB group recorded in accordance with the original PGC are registered as cells for the user defined PGC. Each user defined PGC cell refers to the whole or a part of a VOB. The user defined PGC is suited for deleting a commercial-indicating part or an unnecessary-scene-indicating part from a VOB, and for connecting portions of two different programs and playing back the connection result. The reproduction accorded with the user defined PGC causes all the cells therein to be sequentially played back. A program hierarchy is absent from the user defined PGC. Thus, the user defined PGC corresponds to one program stated by the original PGC.

Fig. 4 shows the details of original PGC information (original PGCI) being data representing an original PGC. The original PGCI has general information PGC_GI of the original PGC, one or more attached information pieces PGI#i of the respective related programs, search pointers CI_SRP#j for cell information pieces in the original PGC, and cell information pieces M_CI#j of the respective related cells corresponding to moving pictures. The cell information pieces M_CI#j may be replaced by cell information pieces S_CI#j of the respective related cells corresponding to still pictures.

As previously mentioned, there is user defined PGC information (user defined PGCI) being data representing a user defined PGC. The structure of the user defined PGCI is basically similar to that of the original PGCI in Fig. 4. Specifically, the user defined PGCI has general information PGC_GI of the user defined PGC, search pointers CI_SRP#j for cell information pieces in the user defined PGC, and cell information pieces M_CI#j of the respective related cells corresponding to moving pictures. The cell information pieces M_CI#j may be replaced by cell information pieces S_CI#j of the respective related cells corresponding to still pictures. Attached information pieces PGI#i (see Fig. 4) are absent from the user defined PGCI.

Regarding each of the original PGCI and the user defined PGCI, the PGC general information PGC_GI contains an information piece representing the number PG_Ns of the programs in the related PGC, and an information piece representing the number CI_SRP_Ns of the search pointers CI_SRP#j. In the case of the user defined PGCI, the program number PG_Ns is equal to zero since a program is absent from the user defined PGC. The number of the attached information pieces PGI#i is equal to the program number PG_Ns. Thus, the variable "i" changes in the range as 1 ≦ i ≦ PG_Ns. Each attached information piece PGI#i contains a data piece representing the number C_Ns of cells in the related program, a data piece representing primary text information PRM_TXTI related to the program, a data piece representing a search pointer number IT_TXT_SRPN for item text information related to the program, and a data piece indicating representative sill-picture information REP_PICTI for designating the position of a still picture representative of the program. The item text information is stored in a data structure within the VR_MANGR.IFO file which separates from the original PGCI.

The number of the search pointers CI_SRP#j is equal to the number CI_SRP_Ns. Thus, the variable "j" changes in the range as 1 ≦ j ≦ CI_SRP_Ns. Each search pointer CI_SRP#j has a data piece representing a head address CI_SA of the related cell information piece CI. Each cell information piece M_CI#j has data representing cell general information M_C_GI, and data representing one or more cell entry point information pieces M_C_EPI#k. The cell general information M_C_GI contains a data piece representing the type C_TY of the related cell, and a data piece representing the number C_EPI_Ns of cell entry points. Each cell entry point information piece M_C_EPI#k contains a data piece representing the type EP_TY of the related entry point, a data piece representing the playback time point (the playback time stamp) EP_PTM of the related entry point, and a data piece representing primary text information PRM_TXTI related to the entry point. The entry point type EP_TY can be changed between first one "A" void of primary text information PRM_TXTI and second one "B" having primary text information PRM_TXTI.

With reference to Figs. 2 and 3, each entry point EP designates a time point in a cell C, and allows access to an intermediate point in the cell or a program which corresponds to the designated time point.

The DVD-VR standards are unsuited for the recording of high-quality linear PCM audio data on a disc. According to the DVD-VR standards, it is mandatory that each VOB contains a video stream. Thus, it is difficult to record only audio data on a disc. Regarding audio data, the DVD-VR standards support only 2-channel linear PCM audio data and compressed audio data. The DVD-VR standards do not support high-quality linear PCM audio data having more than 2 channels.

Therefore, to mainly record audio data on a DVD-RW disc or a DVD-RAM disc, it is necessary to provide a new method. Here, a conceivable DVD disc designed for mainly storing audio contents is referred to as a DVD audio recording disc (a DVD-AR disc). In an assumed case where a DVD-RW disc or a DVD-RAM disc is designed for not only use as a DVD-VR disc but also use as a DVD-AR disc, important points to be considered are as follows.
① A common drive apparatus is assumed which supports both a DVD-VR disc and a DVD-AR disc. To make a greater part of the apparatus common to a DVD-VR disc and a DVD-AR disc, it is desirable that the data structures of the DVD-VR disc and the DVD-AR disc are similar to each other to a higher degree.
② It is desirable that one DVD-RW disc or one DVD-RAM disc stores not only contents data of the DVD-VR standards but also contents data of the DVD-AR standards. It is desirable that during the drive of one DVD-RW disc or one DVD-RAM disc, a DVD-VR video program and DVD-AR audio contents can be simultaneously played back while being in connection with each other.

There is a DVD-Audio disc conforming to DVD Specifications for Read-Only Disc, Part 4 AUDIO SPECIFICATIONS. The above-indicated point ②is also important to the case where audio contents and video contents are legally copied from a DVD-Audio disc onto a DVD-RW disc or a DVD-RAM disc. According to the DVD-Audio data format, both an audio track and a video track can be placed in a "group" being a continuous playback unit. In the case where such a group is copied onto a DVD-RW disc or a DVD-RAM disc, it is desirable that audio track data are recorded as DVD-AR data while video track data are recorded as DVD-VR data.

It is conceivable to use the DVD-VR data structure as a DVD-AR data structure. The DVD-VR file structure in Fig. 1 can be used as a DVD-AR file structure. The DVD-VR original PGC information structure in Fig. 2 can be applied to a DVD-AR disc. In the case of a DVD-AR disc, a program corresponds to a tune (a track prescribed by the DVD-Audio standards or the CD-DA standards). The DVD-VR user defined PGC information structure in Fig. 3 can not be used for a DVD-AR disc as will be mentioned below.

In the case of a DVD-AR disc for audio application, a user defined PGC is required to allow selection of one or ones from programs (tunes) which have been recorded in accordance with an original PGC, and to allow sequential playback of the selected program or programs in a designated order. It is assumed that there are three different CD-DA discs each storing audio data representing 10 tunes, and the audio data are legally copied from the three CD-DA discs onto a DVD-AR disc. The resultant DVD-AR disc has audio data representing 30 tunes. According to an original PGC, the 30 tunes are sequentially played back in an order equal to the recording order. When the 30-tune playback is required to be divided into three portions of the first 10 tunes, the second 10 tunes, and the third 10 tunes respectively, it is necessary to provide three user defined PGCs for allowing the playback of the first 10 tunes, the playback of the second 10 tunes, and the playback of the third 10 tunes respectively. In addition, it is necessary that the audio data pieces representing the respective 10 tunes designated by each of the user defined PGCs can be accessed as programs (tracks) respectively. This means that each of the user defined PGCs needs a program hierarchy. However, as previously mentioned, the DVD-VR format prescribes that a program hierarchy is absent from a user defined PGC. Therefore, the DVD-VR user defined PGC information structure can not be applied to a DVD-AR disc.

One conceivable way of solving this problem is to modify a user defined PGC to use a program hierarchy. User defined PGC information being data representing the modified user defined PGC has one or more attached information pieces PGI#i of respective related programs. The conceivable way has drawbacks as follows.

In the case of an assumed disc storing both DVD-AR contents data and DVD-VR contents data, it is sometimes necessary that the DVD-AR contents data and the DVD-VR contents data are placed under one user defined PGC. However, the conditions where a program hierarchy is absent from a DVD-VR portion while a program hierarchy is present in a DVD-AR portion in one user defined PGC are inconsistent with the PGC information structure in Fig. 3 which matches with only the presence of a program hierarchy or only the absence thereof. Accordingly, it is necessary that a program hierarchy is also absent from a DVD-AR portion in a user defined PGC, and access to a program-corresponding data portion (a tune or a track) can be implemented.

In addition, each attached information piece PGI#i in user defined PGC information is required to have a data piece representing primary text information PRM_TXTI on a related program, a data piece representing a search pointer number IT_TXT_SRPN for item text information related to the program, and a data piece indicating representative sill-picture information REP_PICTI for designating the position of a still picture representative of the program (see Fig. 4). This requirement comes from the following fact. Text information and representative still-picture information used for a tune (a program) stated by an original PGC should be used as they are even in the case where the tune is registered in a user defined PGC. Therefore, when a program hierarchy is unused, it is necessary to use another data structure for providing a data piece representing primary text information PRM_TXTI, a data piece representing a search pointer number IT_TXT_SRPN, and a data piece indicating representative sill-picture information REP_PICTI.

### First Embodiment

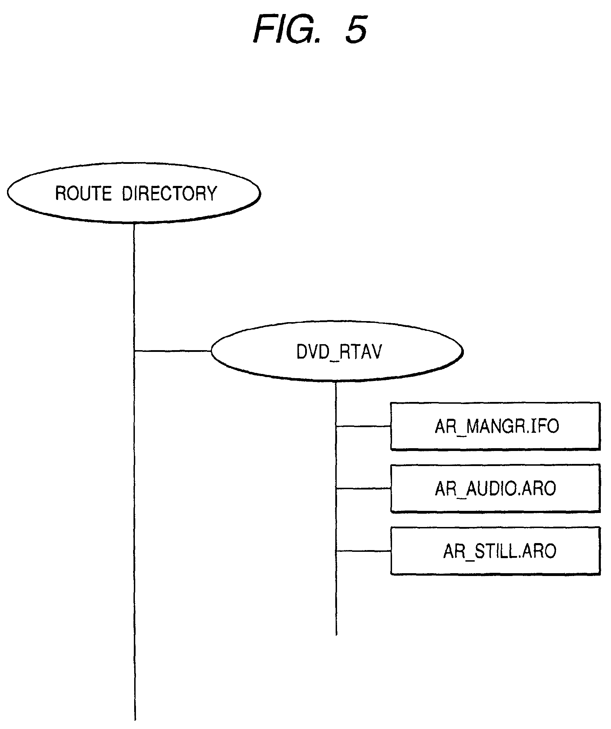

Fig. 5 shows the structure of directories and files on a DVD-AR disc according to a first embodiment of this invention. The DVD-AR disc means a DVD audio recording disc, that is, a DVD disc designed for mainly storing audio contents. As shown in Fig. 5, there is a route directory under which a DVD_RTAV directory is placed as a sub directory. The DVD_RTAV directory contains an AR_MANGR.IFO file for storing all recording and reproducing management data including data representative of an original PGC and data representative of a user defined PGC or PGCs.

The DVD_RTAV directory further contains an AR_AUDIO.ARO file, an AR_STILL.ARO file. Audio data are stored in the AR_AUDIO.ARO file. Still-picture data (data representing sill pictures) are stored in the AR_STILL.ARO file. Preferably, the still-picture data are designed to provide a function similar to that in an DVD-Audio disc. Since the recording and reproducing management data, the audio data, and the still-picture data are stored in files under the DVD_RTAV directory similar to that in a DVD-VR disc, it is easy to determine the relation between DVD-AR contents data and DVD-VR contents data.

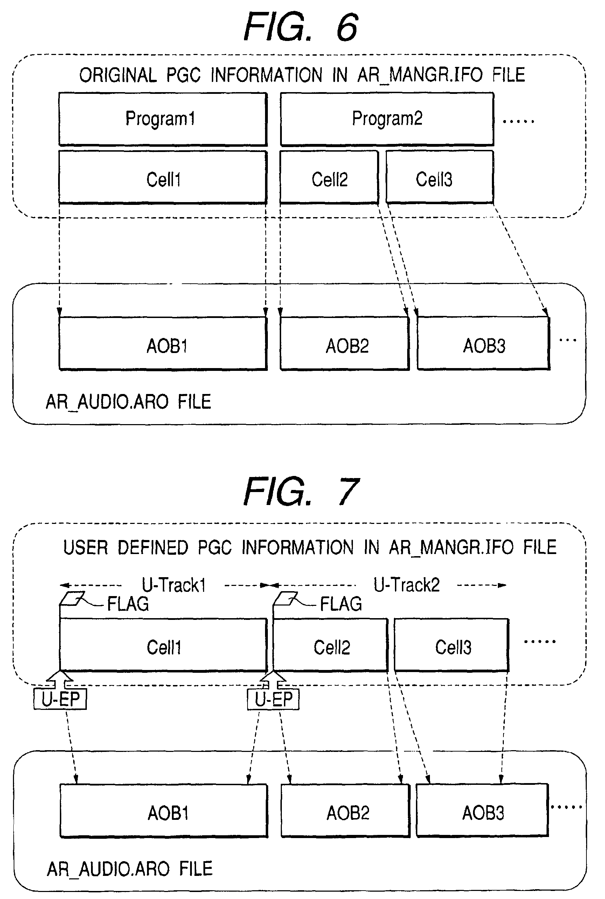

Fig. 6 shows the structure of original PGC information (original PGCI) being data representing an original PGC in the DVD-AR disc. In the case where a sequence of audio data representing one tune (one track) is recorded on the DVD-AR disc, for example, in the case where a sequence of audio data representing one tune (one track) is copied from a CD-DA disc or a DVD-Audio disc, the sequence of audio data is handled as one program composed of one or more cells. In general, taking a pause during the recording causes one program to have a plurality of cells. Also, deleting an intermediate portion from one program to edit the program after the recording causes the program to have a plurality of cells. Each cell is related to one AOB (one audio object). Each AOB is recorded as a program stream in conformity with the MPEG-2 system. Each AOB is a unit of continuous reproduction (continuous playback).

The structure of a program (or programs) and a cell (or cells) corresponds to the recording and reproducing management data for the original PGC. A group of AOBs corresponds to the audio data. A program first recorded on the disc is denoted by Program 1 (program order number 1). Second and later programs recorded on the disc are denoted by Program2 (program order number 2), Program3 (program order number 3), ···, respectively. The reproduction accorded with the original PGC causes all the programs to be sequentially played back in the order of program order number, that is, the recording order. One can be selected from all the programs by referring to the original PGC before the selected program is played back. Regarding the DVD-AR disc, a program corresponds to a tune or a track.

Fig. 7 shows the structure of user defined PGC information (user defined PGCI) being data representing a user defined PGC in the DVD-AR disc. Designated portions of the AOB group recorded in accordance with the original PGC are registered as cells for the user defined PGC. Each user defined PGC cell refers to the whole or a part of an AOB. With reference to Fig. 7, the user defined PGC is used in the case where unnecessary portions (for example, silence-corresponding portions) of AOBs are deleted, and the resultant AOBs are connected as an indication of an after-editing tune. A unit corresponding to one program (one tune) stated by the user defined PGC is called a user defined track or a U-track.

User defined tracks are identified by flags attached to cells. Specifically, as shown in Fig. 7, a flag in a first predetermined logic state indicates that the related cell is first one in the related user defined track. On the other hand, flags attached to second and later cells in each user defined track are in a second predetermined logic state different from the first predetermined logic state. Each user defined track can be loaded with information pieces of entry points U-EP (see Fig. 7) each for storing a data piece representing primary text information PRM_TXTI related to the user defined track, a data piece representing a search pointer number IT_TXT_SRPN for item text information related to the user defined track, and a data piece indicating representative sill-picture information REP_PICTI for designating the position of a still picture representative of the user defined track. By using these entry points U-EP, it is possible to copy a PRM_TXTI data piece, an IT_TXT_SRPN data piece, and a REP_PICTI data piece from an attached information piece PGI in the original PGC information. Also, it is possible to store new information for the user defined track. The reproduction accorded with the user defined PGC causes all the contents (all the user defined tracks) stated by the user defined PGC to be sequentially played back, or causes a designated and selected one (a designated user defined track) of all the contents to be played back. The playback of the selected user defined track is similar to the playback of selected one of the programs stated by the original PGC.

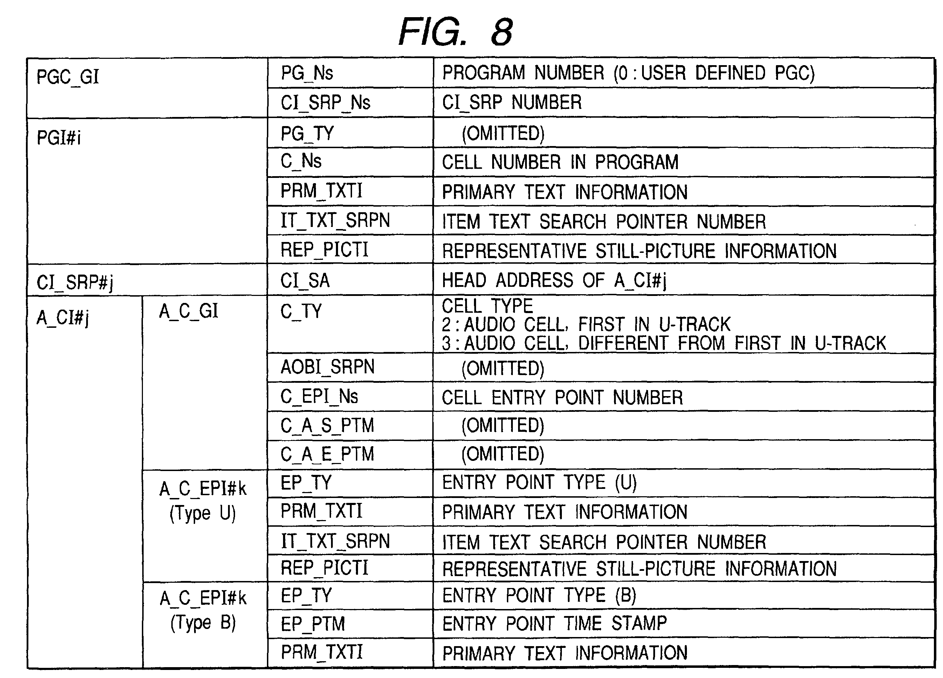

Fig. 8 shows the details of the original PGC information (the original PGCI). The original PGCI has general information PGC_GI of the original PGC, one or more attached information pieces PGI#i of the respective related programs, search pointers CI_SRP#j for cell information pieces in the original PGC, and cell information pieces A_CI#j of the respective related cells corresponding to the audio data.

The structure of the user defined PGCI is basically similar to that of the original PGCI in Fig. 8. Specifically, the user defined PGCI has general information PGC_GI of the related user defined PGC, search pointers CI_SRP#j for cell information pieces in the related user defined PGC, and cell information pieces A_CI#j of the respective related cells corresponding to the audio data. The user defined PGCI is void of attached information pieces PGI#i (see Fig. 8).

Regarding each of the original PGCI and the user defined PGCI, the PGC general information PGC_GI contains an information piece representing the number PG_Ns of the programs in the related PGC, and an information piece representing the number CI_SRP_Ns of the search pointers CI_SRP#j. In the case of the user defined PGCI, the program number PG_Ns is equal to zero since a program is absent from the user defined PGC. The number of the attached information pieces PGI#i is equal to the program number PG_Ns. Thus, the variable "i" changes in the range as 1 ≦ i ≦ PG_Ns. Each attached information piece PGI#i contains a data piece representing the number C_Ns of cells in the related program, a data piece representing primary text information PRM_TXTI related to the program, a data piece representing a search pointer number IT_TXT_SRPN for item text information related to the program, and a data piece indicating representative sill-picture information REP_PICTI for designating the position of a still picture representative of the program. The item text information is stored in a data structure within the AR_MANGR.IFO file which separates from the original PGCI.

The number of the search pointers CI_SRP#j is equal to the number CI_SRP_Ns. Thus, the variable "j" changes in the range as 1 ≦ j ≦ CI_SRP_Ns. Each search pointer CI_SRP#j has a data piece representing a head address CI_SA of the related cell information piece A_CI. Each cell information piece A_CI#j has data representing cell general information A_C_GI, and data representing one or more cell entry point information pieces A_C_EPI#k.

The cell general information A_C_GI contains a data piece representing the type C_TY of the related cell, and a data piece representing the number C_EPI_Ns of cell entry points. The C_TY data piece corresponds to the previously-mentioned flag which indicates whether or not the related cell is first one in a user defined track. The C_TY data piece being "2" is assigned to the first cell in a user defined track while the C_TY data piece being "3" is assigned to the other cells.

The cell entry point information pieces A_C_EPI#k are of a type "U" and a type "B". Each cell entry point information piece A_C_EPI#k of the type "U" relates to an entry point U-EP in Fig. 7. Each cell entry point information piece A_C_EPI#k of the type "U" contains a data piece representing the type EP_TY of the related entry point, and data pieces (information pieces) attached to the related user defined track. Specifically, the attached data pieces include a data piece representing primary text information PRM_TXTI related to the user defined track, a data piece representing a search pointer number IT_TXT_SRPN for item text information related to the user defined track, and a data piece indicating representative sill-picture information REP_PICTI for designating the position of a still picture representative of the user defined track. The item text information is stored in a data structure within the AR_MANGR.IFO file which separates from the user defined PGCI. In each cell entry point information piece A_C_EPI#k of the type "U", the EP_TY data piece is in a predetermined logic state corresponding to the type "U".
According to an example, a cell entry point information piece A_C_EPI#k of the type "U" is stored in the first cell of a user defined track (the cell having a C_TY data piece of "2"), and is absent from the other cells (the cells each having a C_TY data piece of "3").

Each cell entry point information piece A_C_EPI#k of the type "B" contains a data piece representing the type EP_TY of the related entry point, a data piece representing the playback time point (the playback time stamp) EP_PTM of the related entry point, and a data piece representing primary text information PRM_TXTI related to the entry point. In each cell entry point information piece A_C_EPI#k of the type "B", the EP_TY data piece is in a predetermined logic state corresponding to the type "B". Each cell entry point information pieces A_C_EPI#k of the type "B" provides the function of designating a playback start time point (a playback start time stamp) as each "B"-type entry point in Figs. 3 and 4 does.

During the drive of the DVD-AR disc in the first embodiment of this invention, every C_TY data piece of "2" can be detected. Specifically, detection can be made as to whether the C_TY data piece in every cell is "2" or "3". A range from a cell having a C_TY data piece of "2" to a cell immediately preceding a next cell having a C_TY data piece of "2" can be recognized as a user defined track. In the DVD-AR disc of the first embodiment of this invention, the first cell of a user defined track (the cell having a C_TY data piece of "2") stores a data piece representing primary text information PRM_TXTI related to the user defined track, a data piece representing a search pointer number IT_TXT_SRPN for item text information related to the user defined track, and a data piece indicating representative sill-picture information REP_PICTI for designating the position of a still picture representative of the user defined track.

Regarding the DVD-AR disc in the first embodiment of this invention, a user defined track can be detected although a program hierarchy is absent from a user defined PGC. In addition, a PRM_TXTI data piece, an IT_TXT_SRPN data piece, and a REP_PICTI data piece which are attached to the user defined track can be stored as an entry point of the type "U". Therefore, regarding not only the original PGC but also the user defined PGC, a set of the PRM_TXTI data piece, the IT_TXT_SRPN data piece, and the REP_PICTI data piece can be stored.

The difference in structure between a user defined PGC of a DVD-VR disc and a user defined PGC of the DVD-AR disc in the first embodiment of this invention is relatively small. Thus, it is possible to make greater portions of disc drive apparatuses common to a DVD-VR disc and a DVD-AR disc. In the case of a single recording disc storing both DVD-AR contents data and DVD-VR contents data, it is easy to place DVD-AR contents data pieces (AOBs) and DVD-VR contents data pieces (VOBs) in common under one user defined PGC.

According to a first modification of the first embodiment of this invention, the flag indicative of whether or not the related cell is first one in a user defined track is formed by a new data element defined in the cell general information A_C_GI rather than the C_TY data piece. A second modification of the first embodiment of this invention replaces the cell entry point information pieces A_C_EPI#k of the type "B" by ones of another type.

### Second Embodiment

A second embodiment of this invention is similar to the first embodiment thereof except for design changes mentioned hereafter.

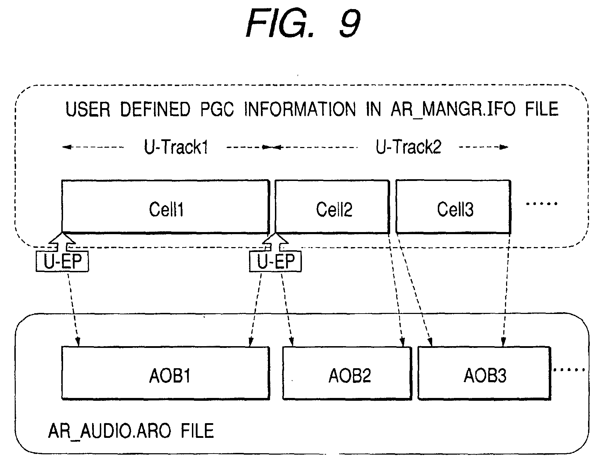

Fig. 9 shows the structure of user defined PGC information (user defined PGCI) being data representing a user defined PGC in a DVD-AR disc of the second embodiment of this invention. A flag indicative of whether or not the related cell is first one in a user defined track is absent from the user defined PGCI in Fig. 9. As in the first embodiment of this invention, each user defined track stated by the user defined PGC can be loaded with information pieces of entry points U-EP (see Fig. 9) each for storing a data piece representing primary text information PRM_TXTI related to the user defined track, a data piece representing a search pointer number IT_TXT_SRPN for item text information related to the user defined track, and a data piece indicating representative sill-picture information REP_PICTI for designating the position of a still picture representative of the user defined track.

In the second embodiment of this invention, the first cell in each user defined track is loaded with an information piece of an entry point U-EP of a type "U", while the other cells are void of an information piece of an entry point U-EP of the type "U". Accordingly, the first cell in each user defined track can be detected on the basis of an information piece of an entry point U-EP of the type "U".

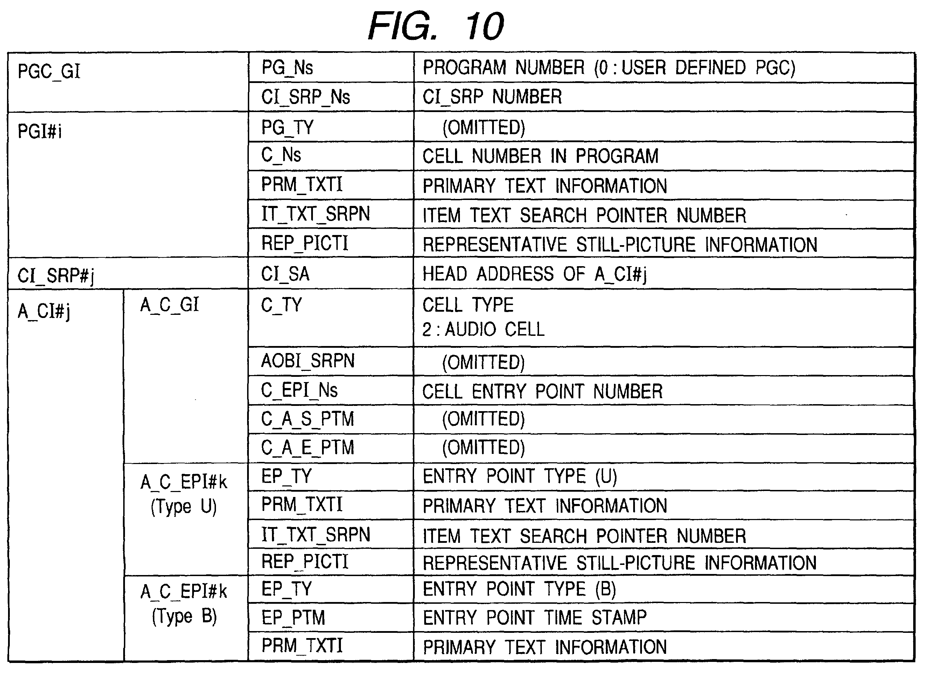

Fig. 10 shows the details of original PGC information (original PGCI) or user defined PGC information (user defined PGCI) in the DVD-AR disc of the second embodiment of this invention. The PGCI of Fig. 10 differs from that of Fig. 8 in a point as follows. In the PGCI of Fig. 10, a C_TY data piece (a cell-type data piece) of "2" is assigned in common to all audio cells. As previously mentioned, the first cell in each user defined track can be detected on the basis of whether an information piece of an entry point U-EP of the type "U" is present or absent.

In the PGCI of Fig. 10, each cell entry point information piece A_C_EPI#k of the type "U" contains data pieces (information pieces) attached to the related user defined track. Specifically, the attached data pieces include a data piece representing primary text information PRM_TXTI related to the user defined track, a data piece representing a search pointer number IT_TXT_SRPN for item text information related to the user defined track, and a data piece indicating representative sill-picture information REP_PICTI for designating the position of a still picture representative of the user defined track.

It should be noted that cell entry point information pieces A_C_EPI#k of a type "B" in Fig. 10 may be replaced by ones of another type.

According to the second embodiment of this invention, the first cell in each user defined track is loaded with an information piece of an entry point U-EP of the type "U" while the other cells are void of an information piece of an entry point U-EP of the type "U". During the drive of the DVD-AR disc in the second embodiment of this invention, every information piece of an entry point U-EP of the type "U" can be detected. In addition, detection can be made as to whether or not every cell has an information piece of an entry point U-EP of the type "U". A range from a cell having an information piece of an entry point U-EP of the type "U" to a cell immediately preceding a next cell having an information piece of an entry point U-EP of the type "U" can be recognized as a user defined track. In the DVD-AR disc of the second embodiment of this invention, the first cell of a user defined track (the cell having an information piece of an entry point U-EP of the type "U") stores a data piece representing primary text information PRM_TXTI related to the user defined track, a data piece representing a search pointer number IT_TXT_SRPN for item text information related to the user defined track, and a data piece indicating representative sill-picture information REP_PICTI for designating the position of a still picture representative of the user defined track.

The DVD-AR disc in the second embodiment of this invention does not use a program hierarchy in the user defined PGC. In addition, a PRM_TXTI data piece, an IT_TXT_SRPN data piece, and a REP_PICTI data piece which are attached to the user defined track can be stored as an entry point of the type "U". The user defined track can be detected in response to the entry point of the type "U". Thus, regarding not only the original PGC but also the user defined PGC, a set of the PRM_TXTI data piece, the IT_TXT_SRPN data piece, and the REP_PICTI data piece can be stored.

The difference in structure between a user defined PGC of a DVD-VR disc and a user defined PGC of the DVD-AR disc in the second embodiment of this invention is relatively small. Thus, it is possible to make greater portions of disc drive apparatuses common to a DVD-VR disc and a DVD-AR disc. In the case of a single recording disc storing both DVD-AR contents data and DVD-VR contents data, it is easy to place DVD-AR contents data pieces (AOBs) and DVD-VR contents data pieces (VOBs) in common under one user defined PGC.

### Third Embodiment

A third embodiment of this invention is similar to one of the first and second embodiments thereof except for design changes mentioned hereafter. In a DVD-AR disc of the third embodiment of this invention, each cell can be loaded with information pieces of entry points of the type "U" and at least one other type. Specifically, each cell information piece A_CI#j has data representing cell entry point information pieces A_C_EPI#k of the type "U" and the other type (or types).

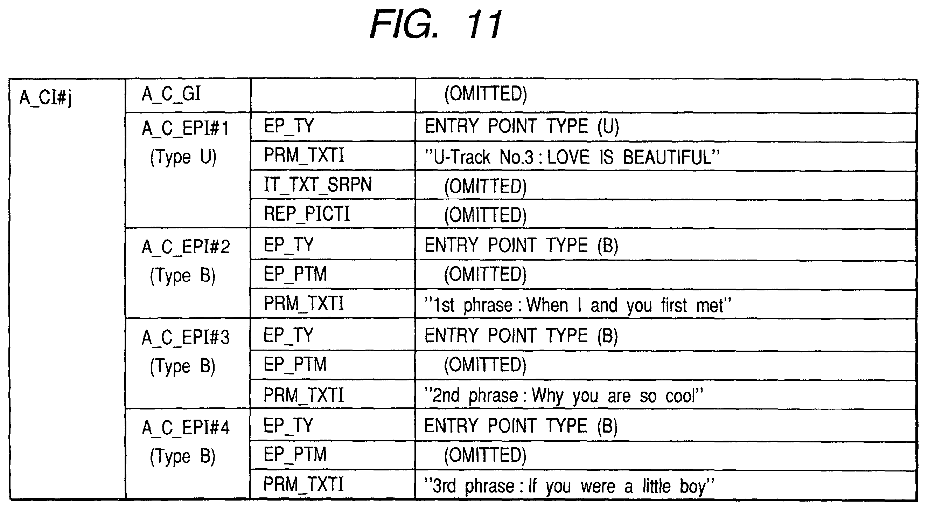

Fig. 11 shows the details of a cell information piece A_CI#j in the DVD-AR disc of the third embodiment of this invention. As shown in Fig. 11, the cell information piece A_CI#j has data representing 4 cell entry point information pieces A_C_EPI#j, that is, a first cell entry point information piece A_C_EPI#1 of the type "U", a second cell entry point information piece A_C_EPI#2 of a type "B", a third cell entry point information piece A_C_EPI#2 of the type "B", and a fourth cell entry point information piece A_C_EPI#2 of the type "B".

The entry point information piece A_C_EPI#1 of the type "U" contains a PRM_TXTI data piece, an IT_TXT_SRPN data piece, and a REP_PICTI data piece which are data pieces (information pieces) attached to the related user defined track. Preferably, the entry point information piece A_C_EPI of the type "U" is located at a first place in the set or sequence of the entry point information pieces A_C_EPI#j. In this case, it is possible to quickly find the entry point information piece A_C_EPI of the type "U", and hence quickly retrieve the attached information pieces of the user defined track.

### Fourth Embodiment

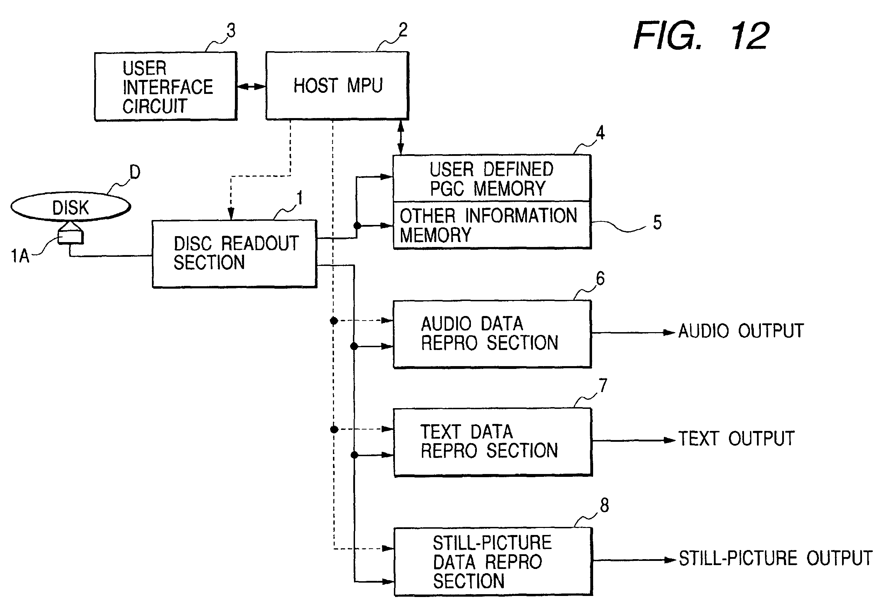

Fig. 12 shows a reproducing apparatus (a player or a disc drive) according to a fourth embodiment of this invention. The apparatus of Fig. 12 reproduces information from an information recording disc "D" equal to a DVD-AR disc in one of the first, second, and third embodiments of this invention.

The apparatus of Fig. 12 includes a disc readout section 1, a head (a pickup) 1A, a host microprocessing unit 2, an user interface circuit 3, memories 4 and 5, an audio data reproducing section 6, a text data reproducing section 7, and a still-picture data reproducing section 8.

The disc readout section 1 is connected to the head 1A, the host microprocessing unit 2, the memories 4 and 5, the audio data reproducing section 6, the text data reproducing section 7, and the still-picture data reproducing section 8. The head 1A can access the recording disc "D". The host microprocessing unit 2 is connected to the user interface circuit 3, the memories 4 and 5, the audio data reproducing section 6, the text data reproducing section 7, and the still-picture data reproducing section 8. The user interface circuit 3 can be accessed by a user. The memory 4 is assigned to a user defined PGC or PGCs while the memory 5 is assigned to other information.

The host microprocessing unit 2 includes a memory storing a control program. The host microprocessing unit 2 controls the disc readout section 1, the user interface circuit 3, the memories 4 and 5, the audio data reproducing section 6, the text data reproducing section 7, and the still-picture data reproducing section 8 in accordance with the control program, thereby implementing the reproduction of data (information) from the recording disc "D".

During an initial stage of the reproduction of information from the recording disc "D", the disc readout section 1 is controlled by the host microprocessing unit 2 and hence reads out data from the AR_MANGR.IFO file via the head 1A. The readout data contain original PGC information, user defined PGC information (user defined PGC data), other recording and reproducing management data, and item text data. The disc readout section 1 and the memories 4 and 5 are controlled by the host microprocessing unit 2 so that the user defined PGC data are transferred from the disc readout section 1 to the memory 4 while the other data are transferred therefrom to the memory 5. As a result, the user defined PGC data are stored in the memory 4 while the other data are stored in the memory 5.

During a subsequent stage of the reproduction of information from the recording disc "D", the disc readout section 1 is controlled by the host microprocessing unit 2 and hence reads out audio data, text data, and still-picture data from the recording disc "D" via the head 1A. The disc readout section 1, the audio data reproducing section 6, the text data reproducing section 7, and the still-picture data reproducing section 8 are controlled by the host microprocessing unit 2 so that the readout audio data, the readout text data, and the readout still-picture data are fed from the disc readout section 1 to the audio data reproducing section 6, the text data reproducing section 7, and the still-picture data reproducing section 8 respectively. Text data may be fed from the memory 5 to the text data reproducing section 7. The audio data reproducing section 6 decodes the audio data into a reproduced audio signal. The audio data reproducing section 6 outputs the reproduced audio signal. The text data reproducing section 7 decodes the text data into a reproduced text-indicating signal. The text data reproducing section 7 outputs the reproduced text-indicating signal. The still-picture data reproducing section 8 decodes the still-picture data into a reproduced still-picture-indicating signal. The still-picture data reproducing section 8 outputs the reproduced still-picture-indicating signal.

The user can access the user interface circuit 3 to input a signal representing a user's request for changed playback directed to a user defined PGC. In the case where the user's request signal is inputted into the host microprocessing unit 2 via the user interface circuit 3, the host microprocessing unit 2 reads, from the memory 4, data (starting data) for starting the playback of the user defined PGC. The host microprocessing unit 2 controls the disc readout section 1 in response to the starting data so that the disc readout section 1 starts reading out contents data from the recording disc "D" via the head 1A which correspond to the user defined PGC. The readout contents data are distributed from the disc readout section 1 to the audio data reproducing section 6, the text data reproducing section 7, and the still-picture data reproducing section 8. As a result, the audio contents corresponding to the user defined PGC are played back. In other words, the user defined PGC is played back.

In the case where a user defined track is changed during the playback of the user defined PGC, or in the case where a user defined track is designated and the playback of the user defined PGC is started, the apparatus of Fig. 12 implements the following sequence of processes.
(1) The disc readout section 1 is controlled by the host microprocessing unit 2 and hence reads out the user defined PGC information from the recording disc "D" via the head 1A. The disc readout section 1 and the memory 4 are controlled by the host microprocessing unit 2 so that the user defined PGC information is transferred from the disc readout section 1 to the memory 4. Thus, the user defined PGC information is stored in the memory 4.
(2) The host microprocessing unit 2 accesses the user defined PGC information in the memory 4. The host microprocessing unit 2 decodes all the cell information pieces A_CI or ones among all the cell information pieces A_CI in the user defined PGC information, thereby detecting which of the cells compose the user defined track to be played back. The detected cells composing the user defined track to be played back are the target cells. In the case where the recording disc "D" is equal to a DVD-AR disc of the first embodiment of this invention, the detection of the target cells is implemented by referring to the C_TY data pieces (the cell-type data pieces). In the case where the recording disc "D" is equal to a DVD-AR disc of the second embodiment of this invention, the detection of the target cells is implemented by referring to the cell entry point information pieces A_C_EPI of the type "U".
(3) The disc readout section 1 is controlled by the host microprocessing unit 2 in response to the cell information pieces A_CI of the target cells, and hence reads out contents data from the recording disc "D" via the head 1A which correspond to the target cells. The readout contents data are distributed from the disc readout section 1 to the audio data reproducing section 6, the text data reproducing section 7, and the still-picture data reproducing section 8. As a result, an audio signal, a text-indicating signal, and a still-picture-indicating signal are reproduced which originate from the contents data corresponding to the target cells.

In the case where one is selected from the programs in the original PGC and the selected program is required to be played back, the apparatus of Fig. 12 implements the following sequence of processes.
(1) The disc readout section 1 is controlled by the host microprocessing unit 2 and hence reads out the original PGC information from the recording disc "D" via the head 1A. The disc readout section 1 and the memory 5 are controlled by the host microprocessing unit 2 so that the original PGC information is transferred from the disc readout section 1 to a portion of the memory 5. Thus, the original PGC information is stored in the memory 5.
(2) The host microprocessing unit 2 accesses the original PGC information in the memory 5. The host microprocessing unit 2 detects the cells (the target cells) composing the selected program in response to the attached information piece PGI in the original PGC information which corresponds to the selected program.
(3) The disc readout section 1 is controlled by the host microprocessing unit 2 in response to the cell information pieces A_CI of the target cells, and hence reads out contents data from the recording disc "D" via the head 1A which correspond to the target cells. The readout contents data are distributed from the disc readout section 1 to the audio data reproducing section 6, the text data reproducing section 7, and the still-picture data reproducing section 8. As a result, an audio signal, a text-indicating signal, and a still-picture-indicating signal are reproduced which originate from the contents data corresponding to the target cells.

### Fifth Embodiment

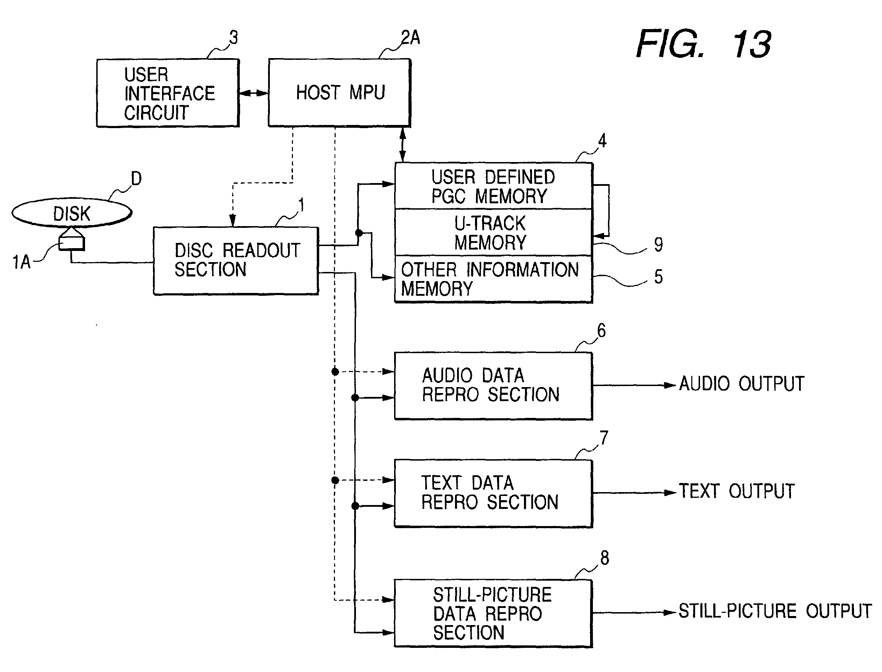

Fig. 13 shows a reproducing apparatus (a player or a disc drive) according to a fifth embodiment of this invention. The apparatus of Fig. 13 is similar the apparatus of Fig. 12 except for design changes mentioned hereafter. The apparatus of Fig. 13 includes a host microprocessing unit 2A instead of the host microprocessing unit 2 (see Fig. 12). The apparatus of Fig. 13 includes a memory 9 connected to the memory 4 and the host microprocessing unit 2A. The memory 9 may be a portion of the memory 5.

A control program for the host microprocessing unit 2A is designed to enable the apparatus of Fig. 13 to operate as mentioned below. In the case where the playback of a specified user defined track in a user defined PGC is required, the apparatus of Fig. 13 implements the following sequence of processes.
(1) The disc readout section 1 is controlled by the host microprocessing unit 2A and hence reads out the user defined PGC information from the recording disc "D" via the head 1A. The disc readout section 1 and the memory 4 are controlled by the host microprocessing unit 2A so that the user defined PGC information is transferred from the disc readout section 1 to the memory 4. Thus, the user defined PGC information is stored in the memory 4.
(2) The host microprocessing unit 2A accesses the user defined PGC information in the memory 4. The host microprocessing unit 2 decodes all the cell information pieces A_CI in the user defined PGC information, thereby detecting which of the cells compose each user defined track (that is, the relation between the user defined tracks and the cells). Thus, the host microprocessing unit 2A generates a table signal representing the detected relation between the user defined tracks and the cells. In the case where the recording disc "D" is equal to a DVD-AR disc of the first embodiment of this invention, the detection of the relation between the user defined tracks and the cells is implemented by referring to the C_TY data pieces (the cell-type data pieces). In the case where the recording disc "D" is equal to a DVD-AR disc of the second embodiment of this invention, the detection of the relation between the user defined tracks and the cells is implemented by referring to the cell entry point information pieces A_C_EPI of the type "U". The host microprocessing unit 2A loads the memory 9 with the table signal representing the detected relation between the user defined tracks and the cells.
(3) The host microprocessing unit 2A refers to the table signal in the memory 9, and thereby detects the cells (the target cells) composing the specified user defined track.
(4) The disc readout section 1 is controlled by the host microprocessing unit 2A in response to the cell information pieces A_CI of the target cells, and hence reads out contents data from the recording disc "D" via the head 1A which correspond to the target cells. The readout contents data are distributed from the disc readout section 1 to the audio data reproducing section 6, the text data reproducing section 7, and the still-picture data reproducing section 8. As a result, an audio signal, a text-indicating signal, and a still-picture-indicating signal are reproduced which originate from the contents data corresponding to the target cells.

Even in the case where the user defined track to be played back is changed to new one as long as the user defined PGC remains unchanged, the host microprocessing unit 2A can quickly and easily detect the cells composing the new user defined track in response to the table signal in the memory 9. Therefore, it is possible to quickly start the playback of the new user defined track.

The recording disc "D" can be placed into and ejected from the apparatus of Fig. 13. It is preferable that immediately after the recording disc "D" is placed into the apparatus, the apparatus implements the above-mentioned processes (1) and (2) for each of all the user defined PGCs. In this case, the host microprocessing unit 2A can quickly and easily detect the cells composing a newly-selected user defined track in a newly-selected user defined PGC in response to table signals in the memory 9. Therefore, it is possible to quickly start the playback of the newly-selected user defined track in the newly-selected user defined PGC.

### Sixth Embodiment

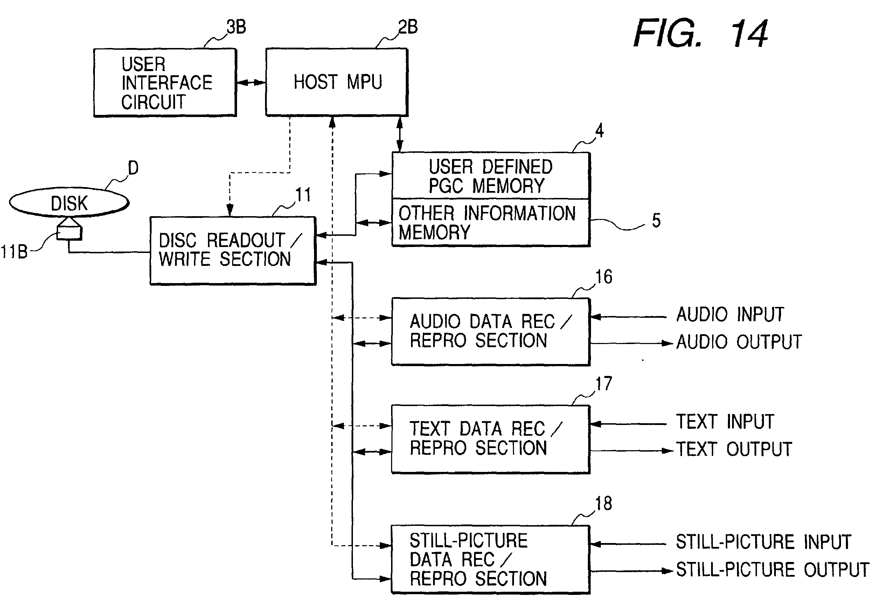

Fig. 14 shows a recording and reproducing apparatus (a recordable player or a disc drive) according to a sixth embodiment of this invention. The apparatus of Fig. 14 can record and reproduce information on and from an information recording disc "D" equal to a DVD-AR disc in one of the first, second, and third embodiments of this invention.

The apparatus of Fig. 14 includes a disc readout/write section 11, a head (a pickup) 11B, a host microprocessing unit 2B, an user interface circuit 3B, memories 4 and 5, an audio data recording/reproducing section 16, a text data recording/reproducing section 17, and a still-picture data recording/reproducing section 18.

The disc readout/write section 11 is connected to the head 11B, the host microprocessing unit 2B, the memories 4 and 5, the audio data recording/reproducing section 16, the text data recording/reproducing section 17, and the still-picture data recording/reproducing section 18. The head 11B can access the recording disc "D". The host microprocessing unit 2B is connected to the user interface circuit 3B, the memories 4 and 5, the audio data recording/reproducing section 16, the text data recording/reproducing section 17, and the still-picture data recording/reproducing section 18. The user interface circuit 3B can be accessed by a user. The memory 4 is assigned to a user defined PGC or PGCs while the memory 5 is assigned to other information.

The host microprocessing unit 2B includes a memory storing a control program. The host microprocessing unit 2B controls the disc readout/write section 11, the user interface circuit 3B, the memories 4 and 5, the audio data recording/reproducing section 16, the text data recording/reproducing section 17, and the still-picture data recording/reproducing section 18 in accordance with the control program, thereby implementing the writing and readout of data (information) on and from the recording disc "D".

Operation of the apparatus of Fig. 14 can be changed between a playback mode and a recording mode in response to a mode-selection instruction signal inputted via the user interface circuit 3B. The playback mode of operation of the apparatus of Fig. 14 is similar to that of the apparatus of Fig. 12. During the playback mode of operation, the disc readout/write section 11, the head 11B, the host microprocessing unit 2B, the user interface circuit 3B, the memories 4 and 5, the audio data recording/reproducing section 16, the text data recording/reproducing section 17, and the still-picture data recording/reproducing section 18 operationally correspond to the disc readout section 1, the head 1A, the host microprocessing unit 2, the user interface circuit 3, the memories 4 and 5, the audio data reproducing section 6, the text data reproducing section 7, and the still-picture data reproducing section 8 in Fig. 12, respectively.

The recording mode of operation of the apparatus of Fig. 14 is as follows. The audio data recording/reproducing section 16 encodes an input audio signal into audio data of a predetermined format. The audio data recording/reproducing section 16 fees the audio data to the disc readout/write section 11. The disc readout/write section 11 is controlled by the host microprocessing unit 2B, thereby writing the audio data on the recording disc "D" via the head 11B. The text data recording/reproducing section 17 encodes an input text-indicating signal into text data of the predetermined format. The text data recording/reproducing section 17 fees the text data to the disc readout/write section 11. The disc readout/write section 11 is controlled by the host microprocessing unit 2B, thereby writing the text data on the recording disc "D" via the head 11B. The still-picture data recording/reproducing section 18 encodes an input still-picture-indicating signal into still-picture data of the predetermined format. The still-picture data recording/reproducing section 18 fees the still-picture data to the disc readout/write section 11. The disc readout/write section 11 is controlled by the host microprocessing unit 2B, thereby writing the still-picture data on the recording disc "D" via the head 11B.

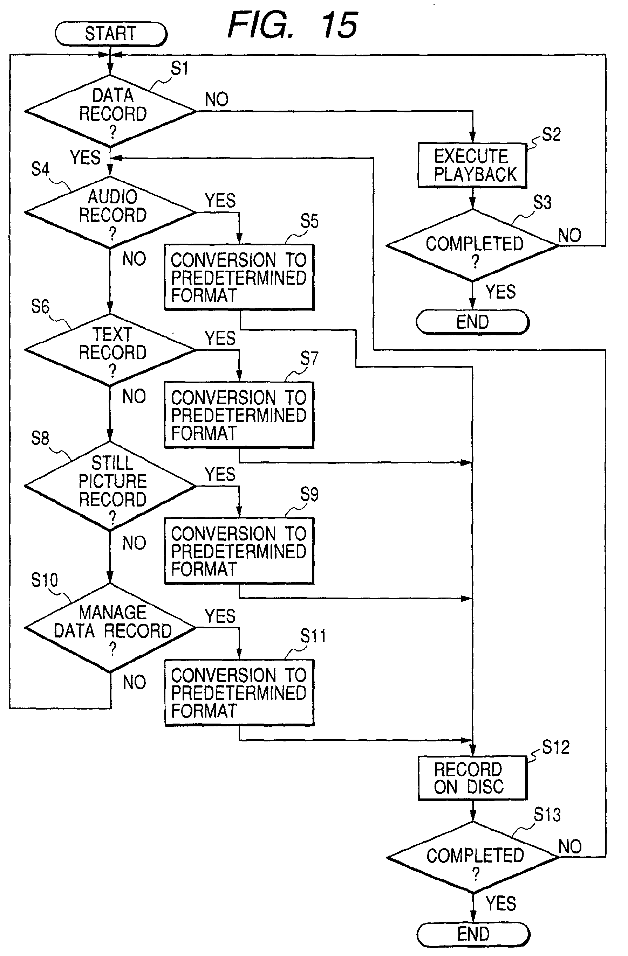

Fig. 15 is a flowchart of a segment of the control program for the host microprocessing unit 2B. As shown in Fig. 15, a first step S1 of the program segment decides whether or not an instruction signal inputted via the user interface circuit 3B requires data recording. When the instruction signal requires data recording, the program advances from the step S1 to a step S4. Otherwise, the program advances from the step S1 to a step S2.

The step S2 implements the playback mode of operation of the apparatus. During the playback mode of operation, audio data, text data, and still-picture data are read out from the recording disc "D", and they are decoded into a reproduced audio signal, a reproduced text-indicating signal, and a reproduced still-picture-indicating signal.

A step S3 following the step S2 decides whether or not the playback has been completed. When the playback has been completed, the program exits from the step S3 and then the current execution cycle of the program segment ends. Otherwise, the program returns from the step S3 to the step S1.

The step S4 decides whether or not the instruction signal requires audio recording. When the instruction signal requires audio recording, the program advances from the step S4 to a step S5. Otherwise, the program advances from the step S4 to a step S6.

The step S5 controls the audio data recording/reproducing section 16 to encode an input audio signal into audio data of a predetermined format. In addition, the step S5 controls the audio data recording/reproducing section 16 to feed the audio data to the disc readout/write section 11. After the step S5, the program advances to a step S12.

The step S6 decides whether or not the instruction signal requires text recording. When the instruction signal requires text recording, the program advances from the step S6 to a step S7. Otherwise, the program advances from the step S6 to a step S8.

The step S7 controls the text data recording/reproducing section 17 to encode an input text-indicating signal into text data of the predetermined format. In addition, the step S7 controls the text data recording/reproducing section 17 to feed the text data to the disc readout/write section 11. After the step S7, the program advances to the step S12.

The step S8 decides whether or not the instruction signal requires still-picture recording. When the instruction signal requires still-picture recording, the program advances from the step S8 to a step S9. Otherwise, the program advances from the step S8 to a step S10.

The step S9 controls the still-picture data recording/reproducing section 18 to encode an input still-picture-indicating signal into still-picture data of the predetermined format. In addition, the step S9 controls the still-picture data recording/reproducing section 18 to feed the still-picture data to the disc readout/write section 11. After the step S9, the program advances to the step S12.

The step S10 decides whether or not the instruction signal requires the recording of user defined management data (user defined PGC information). When the instruction signal requires the recording of user defined management data, the program advances from the step S10 to a step S11. Otherwise, the program returns from the step S10 to the step S1.

The step S11 generates user defined management data (user defined PGC information) of the predetermined format on the basis of the instruction signal. The step S11 feeds the user defined management data to the disc readout/write section 11. After the step S11, the program advances to the step S12.

The step S12 controls the disc readout/write section 11 to record at least one of the audio data, the text data, the still-picture data, and the user defined management data on the recording disc "D" via the head 11B.

A step S13 following the step S12 decides whether or not the data recording has been completed. When the data recording has been completed, the program exits from the step S13 and then the current execution cycle of the program segment ends. Otherwise, the program returns from the step S13 to the step S4.

It should be noted that one or more attached information pieces such as U-EP of respective user defined tracks are contained in the user defined management data (the user defined PGC information).

### Seventh Embodiment

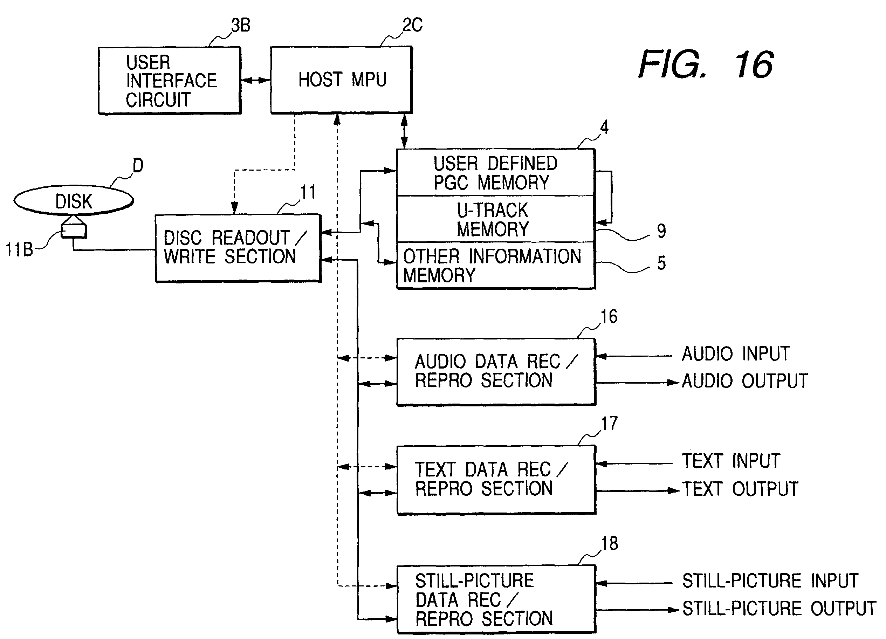

Fig. 16 shows a recording and reproducing apparatus (a recordable player or a disc drive) according to a seventh embodiment of this invention. The apparatus of Fig. 16 is similar the apparatus of Fig. 14 except for design changes mentioned hereafter. The apparatus of Fig. 16 includes a host microprocessing unit 2C instead of the host microprocessing unit 2B (see Fig. 14). The apparatus of Fig. 16 includes a memory 9 connected to the memory 4 and the host microprocessing unit 2C. The memory 9 may be a portion of the memory 5.

A control program for the host microprocessing unit 2C is designed so that the memory 9 will be used during the playback mode of operation similarly to the use of that in Fig. 13. During the recording mode of operation, the memory 9 can be used as a buffer for one or more attached information pieces such as U-EP of respective user defined tracks.

## Claims

1. An audio data recording disc storing audio data, and recording and reproducing management data for the audio data, the recording and reproducing management data including original management data and user defined management data, the original management data being for enabling the audio data to be reproduced in an order equal to an order in which the audio data have been recorded, the user defined management data including cell information pieces related to respective cells, the cells corresponding to a reproduction unit and being related to the audio data, the user defined management data representing a user defined track which includes at least one of the cells and which is decided in response to the cell information pieces according to user's instruction, the user defined track designating portions of the audio data which correspond to the at least one cell in the user defined track, the user defined track representing a reproduction order decided by user's instruction, the user defined management data being for enabling the portions of the audio data which are designated by the user defined track to be reproduced in an order equal to the reproduction order represented by the user defined track.

2. An audio data recording disc as recited in claim 1, wherein the cell information pieces include attached information pieces related to the user defined track, and the attached information pieces include 1) a data piece representing primary text information PRM_TXTI related to the user defined track, 2) a data piece representing a search pointer number IT_TXT_SRPN for item text information related to the user defined track, and 3) a data piece indicating representative sill-picture information REP_PICTI for designating a position of a still picture representative of the user defined track.

3. An audio data recording disc as recited in claim 1, wherein the cell information pieces include attached information pieces related to the user defined track, the cell information pieces further include cell-type data pieces representing whether or not each of the cells is a first cell in the user defined track, the user defined track starts from the first cell represented by one of the cell-type data pieces, and the attached information pieces are stored in the first cell represented by the one of the cell-type data pieces.

4. An audio data recording disc as recited in claim 1, wherein the cell information pieces include attached information pieces related to the user defined track, and the attached information pieces represent whether or not each of the cells is a first cell in the user defined track.

5. An audio data recording disc as recited in claim 1, wherein the cell information pieces include attached information pieces related to the user defined track, and the attached information pieces occupy a first place in a cell-attached information piece set.

6. An apparatus for reproducing information from an audio data recording disc in one of claims 1-5, comprising:
a memory;
first means for reading user defined management data from the audio data recording disc;
second means for deriving a relation between a user defined track and cells from the user defined management data read by the first means, and generating a signal representing the derived relation;
third means for loading the memory with the relation-representing signal generated by the second means; and
fourth means for reproducing at least a portion of audio data, text data, and still-picture data which corresponds to the user defined track from the audio data recording disc in response to the relation-representing signal in the memory.

7. A method of reproducing information from an audio data recording disc in one of claims 1-5, comprising the steps of:
reading user defined management data from the audio data recording disc;
deriving a relation between a user defined track and cells from the read user defined management data;
generating a signal representing the derived relation;
loading a memory with the generated relation-representing signal; and
reproducing at least a portion of audio data, text data, and still-picture data which corresponds to the user defined track from the audio data recording disc in response to the relation-representing signal in the memory.

8. A method of recording audio data, and recording and reproducing management data on an audio data recording disc, the recording and reproducing management data including original management data and user defined management data, the original management data being for enabling the audio data to be reproduced in an order equal to an order in which the audio data have been recorded, the user defined management data including cell information pieces related to respective cells, the cells corresponding to a reproduction unit and being related to the audio data, the user defined management data representing a user defined track which includes at least one of the cells and which is decided in response to the cell information pieces according to user's instruction, the user defined track designating portions of the audio data which correspond to the at least one cell in the user defined track, the user defined track representing a reproduction order decided by user's instruction, the user defined management data being for enabling the portions of the audio data which are designated by the user defined track to be reproduced in an order equal to the reproduction order represented by the user defined track.

9. A method as recited in claim 8, wherein the cell information pieces include attached information pieces related to the user defined track, and the attached information pieces include 1) a data piece representing primary text information PRM_TXTI related to the user defined track, 2) a data piece representing a search pointer number IT_TXT_SRPN for item text information related to the user defined track, and 3) a data piece indicating representative sill-picture information REP_PICTI for designating a position of a still picture representative of the user defined track.

10. A method as recited in claim 8, wherein the cell information pieces include attached information pieces related to the user defined track, the cell information pieces further include cell-type data pieces representing whether or not each of the cells is a first cell in the user defined track, the user defined track starts from the first cell represented by one of the cell-type data pieces, and the attached information pieces are stored in the first cell represented by the one of the cell-type data pieces.

11. A method as recited in claim 8, wherein the cell information pieces include attached information pieces related to the user defined track, and the attached information pieces represent whether or not each of the cells is a first cell in the user defined track.

12. A method as recited in claim 8, wherein the cell information pieces include attached information pieces related to the user defined track, and the attached information pieces occupy a first place in a cell-attached information piece set.

13. An apparatus for recording audio data, and recording and reproducing management data on an audio data recording disc, the recording and reproducing management data including original management data and user defined management data, the original management data being for enabling the audio data to be reproduced in an order equal to an order in which the audio data have been recorded, the user defined management data including cell information pieces related to respective cells, the cells corresponding to a reproduction unit and being related to the audio data, the user defined management data representing a user defined track which includes at least one of the cells and which is decided in response to the cell information pieces according to user's instruction, the user defined track designating portions of the audio data which correspond to the at least one cell in the user defined track, the user defined track representing a reproduction order decided by user's instruction, the user defined management data being for enabling the portions of the audio data which are designated by the user defined track to be reproduced in an order equal to the reproduction order represented by the user defined track.
